# EUROPÄISCHE PATENTSCHRIFT

(11) **EP 1 283 468 B1**
(45) Veröffentlichungstag und Bekanntmachung des Hinweises auf die Patenterteilung: **24.01.2007**
(21) Anmeldenummer: 02015266.6
(22) Anmeldetag: 09.07.2002
(51) Int. Cl.: G06F 11/16

(54) **Zentraleinheit für ein redundantes Automatisierungssystem**
Central unit for a redundant automation system
Unité centrale pour un système d'automatisation redondant

(30) Priorität: 11.07.2001 DE 10133652
(43) Veröffentlichungstag der Anmeldung: 12.02.2003
(73) Patentinhaber: SIEMENS AKTIENGESELLSCHAFT, 80333 München (DE)
(72) Erfinder: Laforsch, Jürgen, 77815 Bühl (DE)

(56) Entgegenhaltungen:
- EP-A- 0 286 856
- WO-A-01/46805
- DE-A- 19 809 089

## Beschreibung

Die Erfindung betrifft eine Zentraleinheit für ein redundantes Automatisierungssystem, welche mit mindestens einer weiteren Zentraleinheit des Automatisierungssystems verbindbar und welche zur Ausführung von mindestens einer Task vorgesehen ist. Darüber hinaus betrifft die Erfindung ein redundantes Automatisierungssystem mit mindestens zwei derartigen miteinander verbundenen Zentraleinheiten.

Im Bereich der Automatisierungstechnik werden häufig redundante Zentraleinheiten benötigt. Diese arbeiten im redundanten Betrieb synchron und es sind gewöhnlich Synchronisationspunkte vorgesehen, an denen die Zentraleinheiten synchronisiert werden. Eine derartige Synchronisation wird z. B. dadurch bewirkt, dass so genannte Tasks, die jeweils durch die Zentraleinheiten abzuarbeiten sind, synchron mit identischen Startereignissen versorgt und gestartet werden.

In dem Siemens-Katalog ST 70, Kapitel 4, Ausgabe 2001 ist ein mit mehreren Zentraleinheiten versehenes Automatisierungssystem beschrieben. Die Zentraleinheiten weisen Mittel auf, welche einen redundanten Betrieb des Automatisierungssystems ermöglichen.

Aus der DE 41 04 114 C2 ist ein redundantes Datenverarbeitungssystem bekannt, welches für den Fall, dass ein Unterbrechungsereignis auftritt, möglichst schnell die Synchronisation der am redundanten Betrieb beteiligten Datenverarbeitungsanlagen einleitet.

EP 0 645 034 B1 offenbart ein Rechnersystem mit miteinander verbundenen Zentraleinheiten. Die Zentraleinheiten sind mit Prozessoren versehen, wobei das Rechnersystem derart ausgestaltet ist, dass eine Synchronisation von Betriebszustandswechseln der Prozessoren oder eine synchrone Bearbeitung von Prozessoraufträgen ermöglicht wird.

Aus der DE 198 09 089 A1 ist ein Synchronisations- und/oder Datenaustauschverfahren für sichere, hochverfügbare Rechner bekannt. Dort sind Maßnahmen vorgesehen, durch welche zur Synchronisierung bzw. zum Datenaustausch erforderliche Routinen verkürzt werden.

WO 01/46805 A1 offenbart ein Computersystem, welches zum Verarbeiten von verschiedenen Arten von Fehlern mit einer gegebenen Fehlerrate ausgebildet ist. Es sind Makro-Synchronisationsmittel vorgesehen, die eine Makro-Synchronisation verwirklichen, welche auf Abstimmungszeitpunkte begrenzt ist.

Der vorliegenden Erfindung liegt die Aufgabe zugrunde, eine Zentraleinheit der eingangs genannten Art zu schaffen, mit welcher ein redundanter Betrieb mit einer weiteren Zentraleinheit vereinfacht wird. Ferner ist ein redundantes Automatisierungssystem anzugeben, dessen Zentraleinheiten für einen redundanten Betrieb einfach synchronisierbar sind.

Diese Aufgabe wird im Hinblick auf die Zentraleinheit durch die im Anspruch 1, im Hinblick auf das Automatisierungsgerät durch die im Anspruch 6 angegebenen Maßnahmen gelöst.

Vorteilhaft ist, dass die Zentraleinheit mit Kommunikationsmechanismen von Standard-Betriebssystemen, z. B. mit Kommunikationsmechanismen des Betriebssystems "Windows NT" oder "VX Works", versehen werden kann, um einen redundanten Betrieb mit einer weiteren Zentraleinheit zu ermöglichen, wobei höherpriore Tasks jederzeit niederpriore Tasks unterbrechen können. Darüber hinaus ist bis zum Zeitpunkt des Starts der Synchronisation keine der Zentraleinheiten blockiert. Ereignisse eines zu steuernden technischen Prozesses, die lediglich einer der Zentraleinheiten zugeführt werden (einkanaliges Ereignis), sind vorteilhaft zweikanalig verarbeitbar, indem der anderen Zentraleinheit die einer Task zugeordnete Nachricht übermittelt wird, wobei diese Zentraleinheit den Empfang dieser Nachricht quittiert. Dabei wird die Synchronisation nicht bereits beim Absenden der Nachricht bzw. Quittung aktiviert, sondern in der ersten Zentraleinheit erst, wenn die zugehörige Quittung empfangen wurde, und in der anderen Zentraleinheit erst, wenn der zugehörige Quittungspuffer nach dem Absenden lokal zurückgegeben wurde. Dadurch wird die Zeit der Blockierung der lokalen Tasks reduziert.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: ein Prinzipschaltbild eines redundanten Automatisierungssystems und
- Figur 2: in schematischer Form einen Programmablauf in einem redundanten Automatisierungssystem.

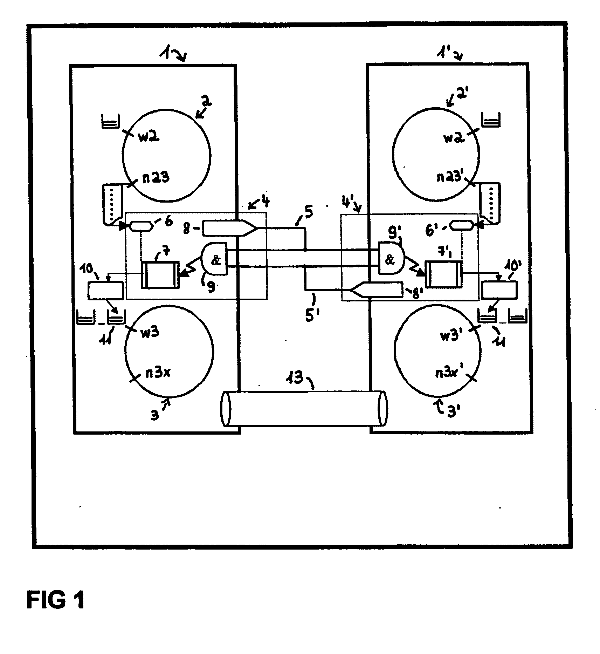

In Figur 1 steht eine erste Zentraleinheit 1 mit einer zweiten Zentraleinheit 1' derart in Wirkverbindung, dass durch die erste Zentraleinheit 1 verarbeitbare Tasks 2, 3 mit entsprechenden durch die zweite Zentraleinheit 1' verarbeitbaren Tasks 2', 3' synchron ausführbar sind. Dazu sind die Zentraleinheiten 1, 1' mit Synchronisationsmitteln 4, 4' versehen, welche über Kommunikationsverbindungen 5, 5' miteinander verbunden sind. Jedes dieser Synchronisationsmittel 4, 4' weist im Wesentlichen einen Zwischenspeicher 6, 6', Interrupt-Service-Mittel 7, 7', einen Ausgangsport 8, 8' und ferner ein nach Art einer UND-Verknüpfung betreibbares Verknüpfungsglied 9, 9' auf.
Im Folgenden wird die Funktions- und Wirkungsweise des redundanten Automatisierungssystems näher erläutert. Dabei ist angenommen, dass die zyklisch verarbeitbaren Tasks 2, 2', 3, 3' - was in der Zeichnung durch eine kreisförmige Darstellung der Tasks angedeutet ist - mit Synchronisationspunkten versehen sind. Diesen Synchronisationspunkten sind Nachrichten n23, n23', n3x, n3x' zugeordnet, welche - wie im Folgenden noch erläutert wird - zum Synchronisieren der Verarbeitung der Tasks vorgesehen sind. Dabei zeigt die Nachricht n23 an, dass der Task 3 und die Nachricht n23', dass der Task 3' zu starten ist. Die Nachrichten n3x, n3x' zeigen an, dass hier nicht dargestellte Tasks x und x' zu starten sind. Im hier dargestellten Beispiel wird lediglich auf die Synchronisierung der Verarbeitung der Task 3 mit der Task 3' eingegangen. Wartepunkte w2, w2', w3, w3' innerhalb der Task 2, 2', 3, 3' beschreiben Programmstellen, in welchen die Tasks 2, 2', 3, 3' in einer Ruhestellung zum Empfang von neuen Nachrichten bereitstehen.
Ferner ist angenommen, dass die Tasks 2, 2' aufgrund von den Zentraleinheiten 1, 1' zugeführten Ereignissen eines zu steuernden technischen Prozesses durch die Zentraleinheiten 1, 1' zu bearbeiten sind. Eine derartige zweikanalige Verarbeitung der den Zentraleinheiten 1, 1' zugeführten Ereignisse erfordert keine taktgenaue Synchronisation der Tasks 2, 2', 3, 3', da der Programmcode dieser zu verarbeitenden Tasks 2, 2', 3, 3' in den Zentraleinheiten 1, 1' im Wesentlichen identisch ist. Es ist selbstverständlich möglich, n Zentraleinheiten vorzusehen, um eine n-kanalige Taskverarbeitung bewirken zu können. Die Tasks 2, 2' übermitteln den Synchronisationsmitteln 4, 4' die Nachrichten n23, n23', falls die Verarbeitung der Tasks 2, 2' bis zu den Synchronisationspunkten fortgeschritten ist, und zeigen somit den Synchronisationsmitteln 4, 4' an, dass die Zentraleinheit 1 die Bearbeitung der Task 3 und die Zentraleinheit 1' die Bearbeitung der Task 3' starten soll. Diese Nachrichten n23, n23' werden zunächst in die Zwischenspeicher 6, 6' der Synchronisationsmittel 4, 4' eingetragen, wobei die Synchronisationsmittel 4, 4' jeweils ein Synchronisationssignal erzeugen. Das von den Synchronisationsmitteln 4 über das Ausgangsport 8 erzeugte Synchronisationssignal wird über die Leitung 5 dem internen UND-Verknüpfungsglied 9 und dem externen Verknüpfungsglied 9' im Synchronisationsmittel 4' der Zentraleinheit 1' zugeführt. Entsprechend wird über das Synchronisationsmittel 4' das über das Ausgangsport 8' erzeugte Synchronisationssignal über die Leitung 5' dem eigenen UND-Verknüpfungsglied 9' und dem Verknüpfungsglied 9 im Synchronisationsmittel 4 der Zentraleinheit 1 zugeführt. Für den Fall, dass z. B. an den Eingängen des Verknüpfungsgliedes 9 sowohl das interne als auch externe Synchronisationssignal aktiv ist, was darauf hinweist, dass sowohl die Verarbeitung der Task 2 durch die Zentraleinheit 1 als auch die Verarbeitung der Task 2' auf der Zentraleinheit 1' bis zu den Synchronisationspunkten fortgeschritten ist, startet die Zentraleinheit 1 die Ausführung der Task 3. Entsprechend startet die Zentraleinheit 1' die Ausführung der Task 3', falls an den Eingängen des Verknüpfungsgliedes 9' sowohl das interne als auch externe Synchronisationssignal aktiv ist. Dazu aktiviert das Verknüpfungsglied 9 der Zentraleinheit 1 die Interrupt-Service-Mittel 7, wodurch ein Scheduler 10 die Nachricht n23 aus dem Zwischenspeicher 6 ausliest und die Nachricht n23 in eine der Task 3 zugeordnete Empfangs-Mailbox 11 hinterlegt.
In der Zentraleinheit 1' aktiviert entsprechend das Verknüpfungsglied 9' die Interrupt-Service-Mittel 7', wodurch ein Scheduler 10' die Nachricht n23' aus dem Zwischenspeicher 6' ausliest und die Nachricht n23' in eine der Task 3' zugeordnete Empfangs-Mailbox 11' hinterlegt.
Für den Fall, dass die Tasks 3, 3' in den Wartepunkten w3, w3' zum Empfang der Nachrichten n23, n23' bereitstehen, übernehmen die Tasks 3, 3' diese Nachrichten n23, n23' aus den Empfangs-Mailboxen 11, 11', wodurch die Ausführung dieser Tasks 3, 3' beginnt (Präemptives Scheduling).

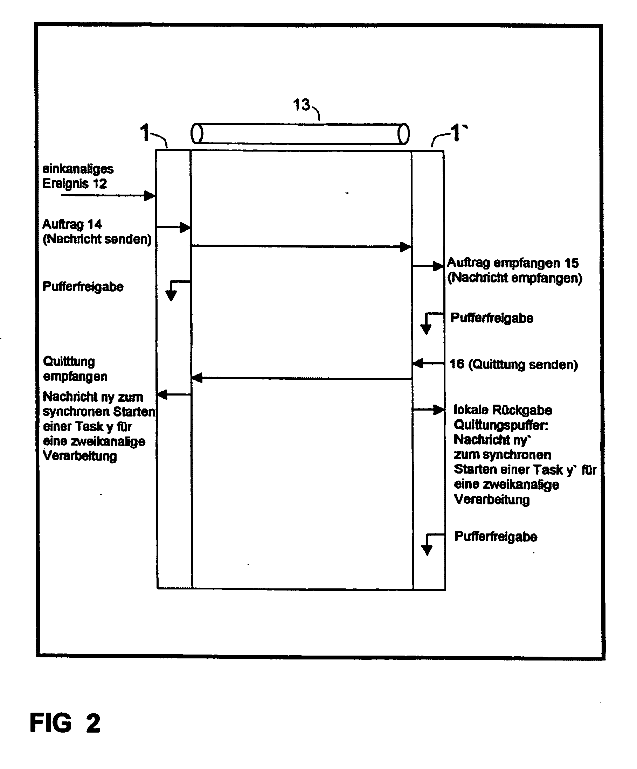

Im Folgenden wird auf Figur 2 verwiesen, in welcher in schematischer Form ein Programmablauf in einem redundanten Automatisierungssystem dargestellt ist. Dabei ist angenommen, dass ein Ereignis 12 eines zu steuernden technischen Prozesses lediglich der Zentraleinheit 1 zugeführt wird (einkanaliges Ereignis), wodurch ein entsprechender Task auf der Zentraleinheit 1 gestartet wird. Um eine zweikanalige Taskverarbeitung aufgrund dieses einkanaligen Ereignisses 12 zu bewirken, ist ein Abgleich der Zentraleinheit 1 mit der Zentraleinheit 1' erforderlich. Die der Task zugeordnete Nachricht wird mit einer Sequenznummer auf der Zentraleinheit 1 zwischengespeichert und der Abgleich erfolgt über eine serielle Synchronisationskopplung 13, wobei die Task auf der Zentraleinheit 1 einen Sendeauftrag 14 über die Kommunikationsverbindung 13 der Zentraleinheit 1' übermittelt. In der Zentraleinheit 1' wird der Auftrag zu einem Zeitpunkt 15 empfangen, ebenfalls zwischengespeichert und über die serielle Synchronisationskopplung 13 quittiert, wobei ein Quittungssignal 16 der Zentraleinheit 1 übermittelt wird. Ferner gibt eine lokale Kommunikationsschnittstelle der Zentraleinheit 1' die abgesendete Quittung nach der Übertragung an die auf dieser Zentraleinheit 1' ablaufende Task zurück. Erst mit dieser "lokalen" Rückgabe und dem Quittungsauftrag wird nach der beschriebenen Art und Weise die Synchronisation der entsprechenden Tasks in der Zentraleinheit 1 und 1' gestartet.

Eine zweikanalige Taskverarbeitung aufgrund eines einkanaligen Ereignisses lässt sich wie folgt kurz zusammenfassen:

Die Zentraleinheit, auf der das einkanalige Ereignis ursprünglich ausgelöst wurde, empfängt über die serielle Synchronisationskopplung die Quittung mit der gespiegelten Sequenznummer des zuvor abgesendeten Auftrags. Dieses Ereignis startet nun die Synchronisation zum synchronen Start einer zweikanaligen Task.

Die synchron aktivierten Interrupt-Service-Mittel tragen nun jeweils lokal die Mail mit der kleinsten Sequenznummer in die Ziel-Mailbox ein.

Das Duplizieren eines einkanalig auftretenden Ereignisses kann auch bereits durch die Interrupt-Service-Mittel erfolgen und muss nicht erst, wie im Beispiel zuvor beschrieben, auf "Taskniveau" gebracht werden. Die Mechanismen sind für beide Fälle gleich.

Bei einer segmentierten Datenübertragung über die serielle Synchronisationskopplung stößt erst die Abschlussquittung die Synchronisation der Tasks an. War die Übertragung fehlerhaft, so wird ein Redundanzverlust signalisiert. Da die Synchronisation der beiden Partner-Zentraleinheiten erst nach der seriellen Datenübertragung gestartet wird, ist die serielle Kopplung nicht zeitkritisch hinsichtlich der kompletten "Ausbremsung" der Taskbearbeitung insgesamt: es kann also eine quasi parallele Bearbeitung zwischen Übertragung zum Datenabgleich, welcher durch den Sende- und Quittungsauftrag bewirkt wurde, und einer Taskverarbeitung stattfinden. Somit ist eine Kopplung in einem redundanten Automatisierungssystem auch über eine vorhandene Standardkommunikationsschnittstelle (10/100 MBaud Ethernet) zur LAN-Vernetzung möglich.

Da die serielle Kopplung bidirektional arbeitet, können beide Zentraleinheiten Daten gleichzeitig senden. Dabei kann es vorkommen, dass die Bearbeitungsreihenfolge der Aufträge nicht immer eindeutig ist. Eine Eindeutigkeit kann dadurch bewirkt werden, dass die Sequenznummern so vergeben werden, dass eine Zentraleinheit die geraden, die andere Zentraleinheit die ungeraden Sequenznummern verwendet. In die Ziel-Mailbox werden jeweils die Nachrichten (Mails) mit der niedrigsten Sequenznummer eingetragen und damit die Zieltasks gestartet. Dabei können für einkanalige Tasks stets Sequenznummern ungleich "0" verwendet werden, wobei eine Sequenznummer gleich "0" ausschließlich für die Synchronisation zweikanaliger Tasks reserviert wird.

## Patentansprüche

1. Zentraleinheit (1) für ein redundantes Automatisierungssystem, welche mit mindestens einer weiteren Zentraleinheit (1') des Automatisierungssystems verbindbar und welche zur Ausführung von mindestens einer Task (2, 3) vorgesehen ist, wobei
- die Zentraleinheit (1) mit der weiteren Zentraleinheit (1') derart in Wirkverbindung steht, dass die Task (2, 3) in der Zentraleinheit (1) mit einer dieser Task (2, 3) entsprechenden Task (2', 3') in der weiteren Zentraleinheit (1') synchron ausführbar ist,
- die Zentraleinheit (1) mit Synchronisationsmitteln (4) versehen ist,
**dadurch gekennzeichnet, dass** den genannten Synchronisations mitteln (4):
- eine dieser Task (2, 3) zugeordnete Nachricht (n23, n3x) zuführbar ist, die den Synchronisationsmitteln (4) die bevorstehende Ausführung dieser Task (2, 3) anzeigt und die bewirkt, dass die Synchronisationsmittel (4) ein internes Synchronisationssignal erzeugen, welches der weiteren Zentraleinheit (1') zuführbar ist, und
- ein externes Synchronisationssignal durch die weitere Zentraleinheit (1') zuführbar ist, und **dadurch weiter gekennzeichnet ist dass**
- die Zentraleinheit (1) ferner mit einem Scheduler (10) versehen ist, und
dass dem Scheduler (10) die der Task (3) zugeordnete Nachricht (n23) zuführbar ist, wodurch der Scheduler (10) die Ausführung dieser Task (3) startet, wobei dem Scheduler (10) die Nachricht (n23) nur dann zuführbar ist, falls das interne und externe Synchronisationssignal aktiviert ist.

2. Zentraleinheit nach Anspruch 1, **dadurch gekennzeichnet,**
**dass** die der Task (3) zugeordnete Nachricht (n23) durch einen aktivierten Task (2) erzeugbar ist.

3. Zentraleinheit nach Anspruch 1 oder 2, **dadurch gekennzeichnet, dass** die der Task (3) zugeordnete Nachricht (n23) den Synchronisationsmitteln (4) über einen Zwischenspeicher (6) zuführbar ist.

4. Zentraleinheit nach einem der Ansprüche 1 bis 3, **dadurch gekennzeichnet, dass** die Synchronisationsmittel (4) Interrupt-Service-Mittel (7) und ferner nach Art einer UND-Verknüpfung betreibbare Verknüpfungsmittel (9) aufweisen, denen das interne als auch das externe Synchronisationssignal zuführbar ist, wobei ein Ausgangssignal der Verknüpfungsmittel (9) die Interrupt-Service-Mittel (7) aktiviert, aufgrund dessen dem Scheduler (10) die der Task (3) zugeordnete Nachricht (n23) zuführbar ist.

5. Zentraleinheit nach einem der Ansprüche 1 bis 4, **dadurch gekennzeichnet, dass** der Scheduler (10) zum Starten der Ausführung der Task (3) die der Task (3) zugeordnete Nachricht (n23) in einer Mailbox (11) hinterlegt.

6. Redundantes Automatisierungssystem mit mindestens zwei miteinander verbundenen Zentraleinheiten (1, 1') nach einem der Ansprüche 1 bis 5.

## Claims

1. Central unit (1) for a redundant automation system, which central unit (1) can be connected to at least one further central unit (1') of the automation system and which is provided for executing at least one task (2, 3), wherein
- the central unit (1) is operatively connected to the further central unit (1') in such a way that the task (2, 3) in the central unit (1) can be executed in synchronism with a task (2', 3') corresponding to said task (2, 3) and residing in said further central unit (1'),
- the central unit (1) is provided with synchronisation means (4), **characterised in that** the said synchronisation means (4) :
- can be supplied with a message (n23, n3x) assigned to said task (2, 3) and indicating to the synchronisation means (4) the impending execution of said task (2, 3) and causing the synchronisation means (4) to generate an internal synchronisation signal which can be supplied to the further central unit (1'), and
- can be supplied with an external synchronisation signal by the further central unit (1'), and further
**characterised in that**
- the central unit (1) is additionally provided with a scheduler (10) and
that the scheduler (10) can be supplied with the message (n23) assigned to the task (3), as a result of which the scheduler (10) starts the execution of said task (3), with it only being possible to supply the message (n23) to the scheduler (10) if the internal synchronisation signal and external synchronisation signal have been activated.

2. Central unit according to claim 1, **characterised in that** the message (n23) assigned to the task (3) can be generated by an activated task (2).

3. Central unit according to claim 1 or 2, **characterised in that** the message (n23) assigned to the task (3) can be supplied to the synchronisation means (4) via a buffer (6).

4. Central unit according to one of claims 1 to 3, **characterised in that** the synchronisation means (4) have interrupt service means (7) and in addition gating means (9) which can be operated in the manner of an AND logic element and to which both the internal synchronisation signal and the external synchronisation signal can be supplied, with an output signal of the gating means (9) activating the interrupt service means (7), on account of which signal the message (n23) assigned to the task (3) can be supplied to the scheduler (10).

5. Central unit according to one of claims 1 to 4, **characterised in that** in order to start the execution of the task (3) the scheduler (10) stores the message (n23) assigned to the task (3) in a mailbox (11).

6. Redundant automation system having at least two interconnected central units (1, 1') according to one of claims 1 to 5.

## Revendications

1. Unité centrale (1) pour un système d'automatisation redondant, laquelle unité centrale peut être reliée à au moins une autre unité centrale (1') du système d'automatisation et est destinée à exécuter au moins une tâche (2, 3),
- l'unité centrale (1) étant en liaison active avec l'autre unité centrale (1') de sorte que la tâche (2, 3) peut être exécutée dans l'unité centrale (1) de façon synchrone avec une tâche (2', 3'), correspondant à cette tâche (2, 3), dans l'autre unité centrale (1'),
- l'unité centrale (1) étant dotée de moyens de synchronisation (4), **caractérisée en ce qu'**un message (n23, n3x), associé à cette tâche (2, 4), peut être envoyé auxdits moyens de synchronisation (4), le message indiquant aux moyens de synchronisation (4) l'exécution imminente de cette tâche (2, 3) et faisant que les moyens de synchronisation (4) produisent un signal de synchronisation interne qui peut être envoyé à l'autre unité centrale (1'), et
- un signal de synchronisation externe pouvant être envoyé par l'autre unité centrale (1'), et **caractérisée en outre en ce que**
- l'unité centrale (1) est en outre dotée d'un programmateur (10) et
- le message (n23) associé à la tâche (3) peut être envoyé au programmateur (10) de façon à ce que le programmateur (10) lance l'exécution de cette tâche (3), le message (n23) ne pouvant être envoyé au programmateur (10) que si le signal de synchronisation interne et le signal de synchronisation externe sont activés.

2. Unité centrale selon la revendication 1, **caractérisée en ce que** le message (n23), associé à la tâche (3), peut être produit par une tâche activée (2).

3. Unité centrale selon la revendication 1 ou 2, **caractérisée en ce que** le message (n23), associé à la tâche (3), peut être envoyé aux moyens de synchronisation (4) par le biais d'une mémoire intermédiaire (6).

4. Unité centrale selon l'une des revendications 1 à 3, **caractérisée en ce que** les moyens de synchronisation (4) comportent des moyens de service d'interruption (Interrupt-Service) et des moyens combinatoires (9) fonctionnant comme une combinaison logique (ET), auxquels peuvent être envoyés le signal de synchronisation interne et le signal de synchronisation externe, un signal de sortie des moyens combinatoires (9) activant les moyens de service d'interruption (7) ce qui permet d'envoyer au programmateur (10) le message (n23) associé à la tâche (3).

5. Unité centrale selon l'une des revendications 1 à 4, **caractérisée en ce que** le programmateur (10) mémorise le message (n23) associé à la tâche (3) afin de lancer l'exécution de la tâche (3).

6. Système d'automatisation redondant comportant au moins deux unités centrales (1, 1') reliées entre elles selon l'une des revendications 1 à 5.
